# EUROPEAN PATENT SPECIFICATION

(11) **EP 1 364 144 B1**
(45) Date of publication and mention of the grant of the patent: **19.12.2007**
(21) Application number: 02702507.1
(22) Date of filing: 01.03.2002
(51) Int. Cl.: F16K 31/34

(54) **FLOAT ACTUATED FLUID FLOW CONTROL DEVICE**
SCHWIMMERBETÄTIGTE DURCHFLUSSREGELVORRICHTUNG
DISPOSITIF DE REGULATION DU DEBIT DE LIQUIDE COMMANDE PAR FLOTTEUR

(30) Priority: 02.03.2001 GB 0105195
(43) Date of publication of application: 26.11.2003
(73) Proprietor: Opella Limited, Hereford HR2 6JR (GB)
(72) Inventor: ROGERS, John Charles, Wolverhampton, West Midlands WV6 0EQ (GB)
(74) Representative: Jackson, Nicholas Andrew
(86) International application number: PCT/GB2002/000876
(87) International publication number: WO 2002/070937

(56) References cited:
- WO-A-98/37348
- US-A- 4 295 488
- US-A- 4 632 142
- US-A- 5 067 516

## Description

This invention relates to a fluid flow control device, particularly for controlling flow of water into a reservoir, such as a toilet cistern or water tank, so as to maintain a predetermined level of water therein.

A fluid flow control device of this type is disclosed in UK Patent Specification No. 1358683 (GB-A-1 358 683). The device is in the form of a control valve having a valve chamber separated from a sub-chamber by a diaphragm, the valve chamber connecting an inlet from a pressurised water supply source to an outlet of the valve. The diaphragm is movable to open or close said outlet and the sub-chamber is connected to the pressurised water supply source by a bleed hole through the diaphragm. The sub-chamber has a fixed restricted outlet tube, opening or closing of which is controlled by a pivoted arm assembly including a sealing member, for closing the outlet tube, and a ball which floats, in use, on the top of the water in the reservoir at which the control valve is used. The pivoted arm assembly controls the pressure in the sub-chamber. Thus when the water level is low, the ball pivotally moves the arm to a position where the sealing member is clear of the outlet tube. The pressure in the sub-chamber is thus less than the pressure in the valve chamber with the result that the diaphragm moves to open said valve outlet and allows water to flow therethrough into the reservoir. When the reservoir has been sufficiently replenished, the ball is at a position where it pivots the arm such that the sealing member closes the outlet tube. Pressure thus rises in the sub-chamber, with the result that the diaphragm is forced onto the valve outlet to close off the water flow therethrough. The valve will remain in this state until the water level in the reservoir again falls.

It has been found that if a control valve is used in a cold water header tank of plastics material, there may be a problem in use with a 'knocking' of the cold water pipes, also known as water hammer. It is believed that the problem arises when only a small amount of water is drawn off, and, due to the flexibility of the tank, a ripple effect is created at the surface of the water in the tank. This causes the ball floating on the surface to 'bob' up and down, such motion rapidly opening and closing the fixed outlet tube from the sub-chamber, and thus similarly opening and closing the outlet of the valve chamber. Supply of water to the reservoir is thus pulsed, resulting in a shock wave along the water pipes, which may produce said water hammer. Where water hammer does occur, this can cause considerable annoyance to the end user.

An object of the invention is to overcome or at least minimise this problem.

This object is achieved by the subject matter of independent claims 1 and 20.

According to the invention a fluid flow control device comprises a valve chamber connecting an inlet for a source of fluid and an outlet, a control member movable between respective first and second positions in which the outlet is open and closed with respect to the inlet, a sub-chamber in communication, in use, with said source of fluid by way of a bleed hole and having an outlet, closure means movable to open or close said sub-chamber outlet in response to the position of float means, and the position of said sub-chamber outlet being movable, in use, relative to a fixed part of the device.

Preferably the sub-chamber outlet is an outlet tube on a flexible disc. Conveniently the disc fits in said fixed part of the device which is advantageously a cover of a body defining the valve chamber, said restricted outlet tube extending through a hole in the cover and the sub-chamber being defined between the control member and said flexible disc.

The invention will now be described, by way of example, with reference to the accompanying drawings, in which:
Figure 1 is a schematic exploded side view of a flow control device of the invention,
Figure 2 is a front view of a cap-like component of the device of Figure 1,
Figure 3 is a cross-sectional view on line 3-3 of Figure 2,
Figure 4 is a front view of a cover of the device of Figure 1,
Figure 5 is a cross-sectional view on line 5-5 of Figure 4,
Figure 6 is a part-fragmentary exploded perspective view of the device of Figure 1,
Figure 7 is an enlarged detailed fragmentary view of part of the device shown in Figure 6,
Figure 8 is a perspective view of an assembled device of the invention,
Figure 9 is a schematic sectional side view of the device of Figure 8, and
Figure 10 is an enlarged fragmentary view of part of the view shown in Figure 9.

The fluid flow control device shown in the drawings is principally intended for use in a toilet cistern or a water header tank, in order to control the filling of said cistern or tank, a wall 10 of which is indicated schematically in the single figure of the drawings. Typically the majority of the component parts of the control valve will be made of a suitable plastics material, such as polypropylene or acetal.

A main body part 11 of the valve is formed as a single piece moulding and this will not be described or illustrated in detail as it is conventional and forms no part of the present invention. This body part 11 has a threaded inlet connector 12 to which, in use, a pressurised cold water supply is connected. With the majority of the main body part 11 of the valve disposed within the tank or cistern, the connector 12 is passed through a circular opening in the wall 10 and the body part held in place at the wall 10 by the use of a nut 13 tightened on the connector 12 into abutment with the exterior of the wall 10 so as to bring the portion of the main body part 11 within the tank or cistern into tight engagement with the inner surface of wall 10, as illustrated.

A water flow path is defined from the inlet connector 12 into a valve chamber, generally indicated at 14, and thence to an outlet, generally indicated at 15, from where the water can flow into the tank or cistern, possibly through a collapsible sleeve (not shown) on a member 16 fitted at the top of the outlet. A plastics insert 14a carrying a section of gauze, and acting as a filter, is received in the valve chamber for flow of water therethrough.

At the outlet 15 is defined a seat around an opening which can receive a plastics material part 17 at the rear side of a central flexible portion of a circular rubber diaphragm 18. The diaphragm, which can seal onto the seat, forms one end wall of the valve chamber 14 when it is fitted in place at the body part 11. As will be described, flexing movement of the diaphragm off or onto its seat causes opening or closing of the outlet from the valve chamber, thereby to allow or prevent flow of water through the valve into the tank or cistern to which it is fitted, in use.

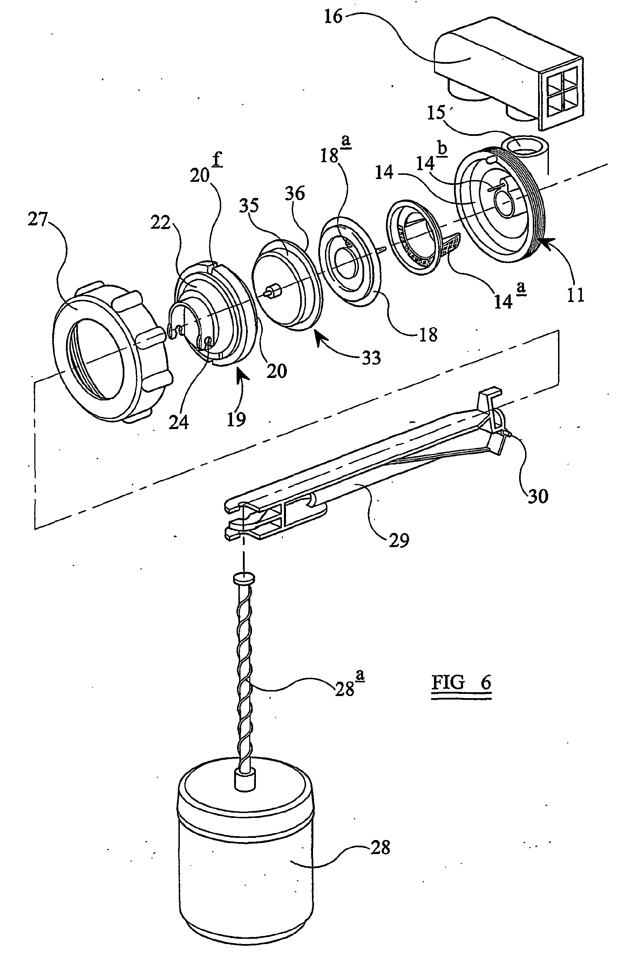

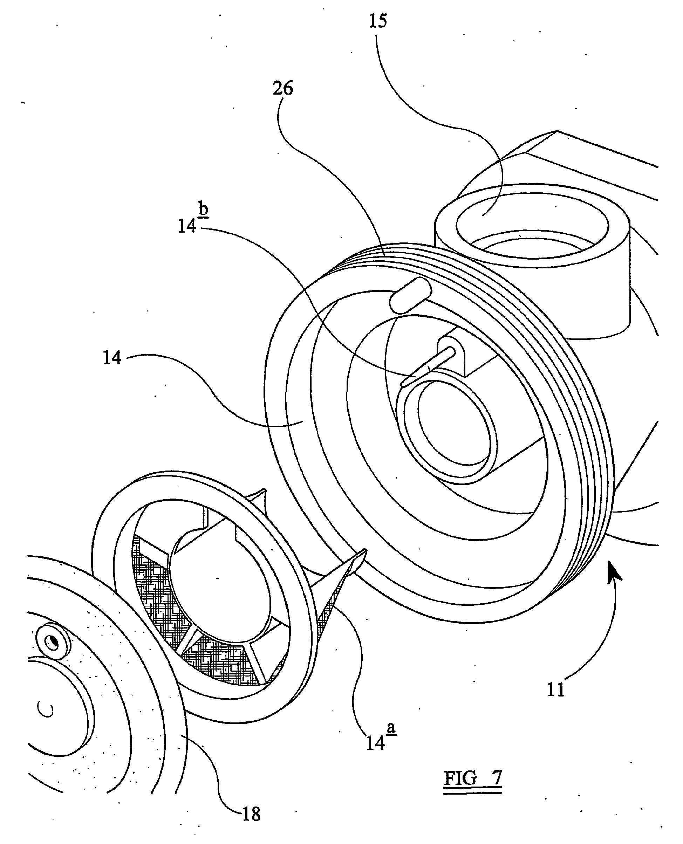

As shown in Figures 6, 7, 9 and 10, the body part 11 has a specially formed metering pin 14b extending therefrom, this pin passing through a bleed hole 18a defined by an aperture through a plastics insert fitted in the diaphragm 18.

Fitted to the open end of the main body part 11 is a cover 19 which is of generally cylindrical form, but stepped both internally and externally. As can be seen from the illustration, externally the cover has a main cylindrical part 20 from the rear of which (the right hand side as viewed in Figure 5) extends axially a smaller diameter annular flange 21. At the front of the part 20 there is an annular frusto-conical surface 22 which leads to a front wall of the cover, on which is an inverted U-shaped member 23 which at its respective lower free ends is formed with two bearing areas, one of which is indicated at 24.

Interiorly the annular flange 21 is formed with a very thin end part 21a which extends around an outwardly axially directed first annular shoulder surface 21b which is spaced slightly inwardly from the plane of the free end of the flange part 21a. The shoulder surface 21b terminates at a radially directed annular shoulder surface 20a. There is then an outwardly axially directed second annular shoulder surface 20b from this annular shoulder surface 20a to a further radially facing annular shoulder surface 20c, which itself extends to the inside of the front wall 20d of the cover from which the member 23 extends. This front wall has the diameter of the smaller diameter part of the frusto-conical surface 22, and there is a central circular hole 20e through the front wall of the cover, for a purpose to be described. Respective notches 20f at respective upper and lower peripheral portions of the part 20 are provided to mate, for example, with a peg 25 extending forwardly from the front end of the valve chamber 14 so as to locate the cover on said open end, thereby closing it, in a particular orientation.

The exterior surface of this front open end of the valve chamber is threaded as at 26 to receive a nut 27 which has a radially extending short annular flange at one of its open ends to engage against the front of part 20 of cover 19. The nut locks the cover 19 onto the valve chamber 14, with the diaphragm in place therebetween with the valve chamber 14 defined between the right hand side of the diaphragm 18, in the orientation illustrated in Figures 6, 7 and 8, and the body part 11 upstream of the connector 12. Thus when the flexible centre part of the diaphragm 18 is off the seat defined at the outlet 15, pressurised water can flow from the inlet connector 12, through the valve chamber 14, and out through the outlet 15.

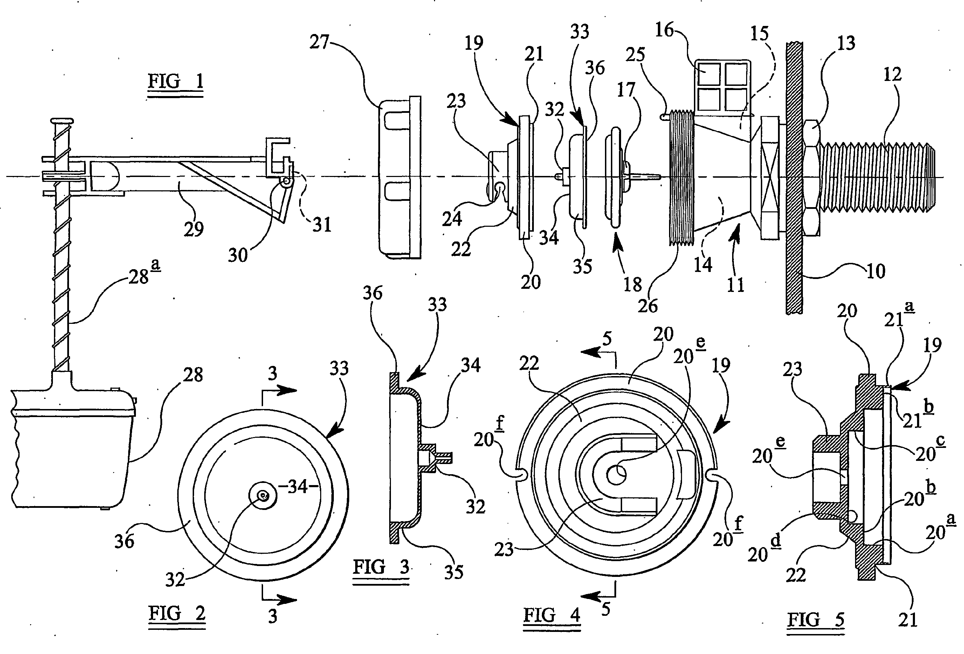

Shown in Figures 1, 6, 8 and 9 is a float 28 with a stem 28a, the float being adjustably carried by an arm 29 which has a pair of cylindrical pivots, one of which 30 is shown in the Figures. These pivots are arranged to be snap-fitted up into the bearing areas 24 of the U-shaped member 23 so as pivotally to connect the arm to the cover 19. At an outwardly facing cylindrical surface at the end of the arm at a position just above the pivots 30, there is a recess in which is disposed a circular rubber pad 31 which, as will be described, acts as a seal against an outlet from a sub-chamber formed at the left hand side of the rubber diaphragm 18, as viewed in Figures 6, 7 and 8, when the arm is horizontal or generally so, and the float thus raised to its uppermost position by water in the tank or cistern.

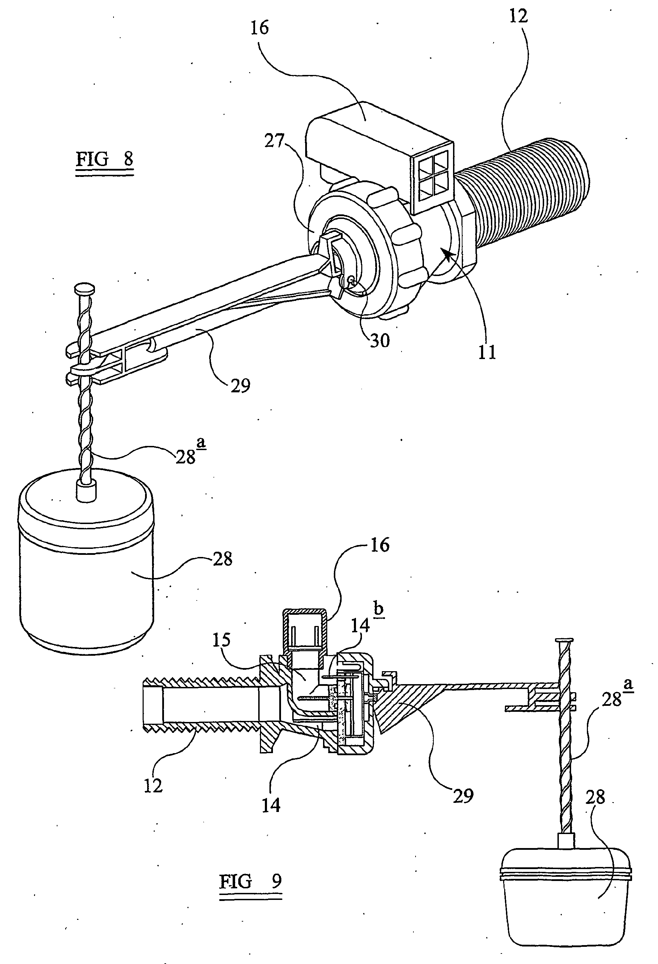

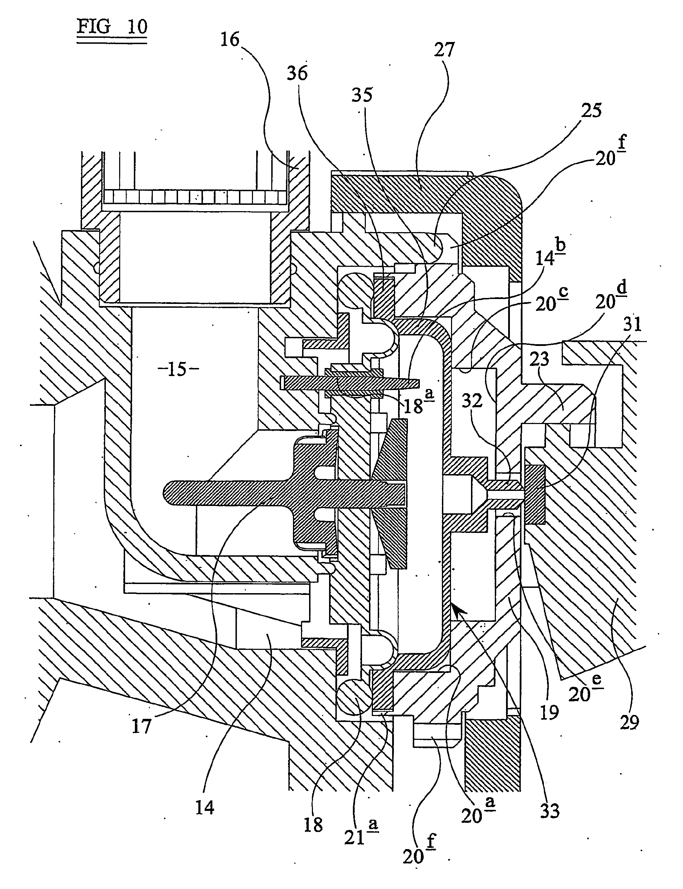

As described so far, the structure of the valve is fairly conventional. However instead of the outlet tube from the sub-chamber being formed as a fixed structure at the front of the cover, surrounded by the member 23, the present invention relates to the formation of this outlet tube 32 on a separate member in the form of a plastics material cap-like member 33. This member has a circular front wall 34 from the centre of which forwardly extends the outlet tube 32, which has a small restricted outlet passage therethrough. As can be seen from the Figures, this tube 32 is externally stepped, and when the cap-like member 33 is received in place between the diaphragm 18 and the cover 19, the smaller part of the stepped outlet tube 32 extends through the circular hole 20e in the wall at the front of the cover 19, with clearance therearound so that, as will be described, this part of the outlet tube 32 can move backwards and forwards through said hole. The front wall 34 has a rear cylindrical part 35 normal thereto, and the rear of the member 33 is defined by an annular radial flange 36 which lies in a plane parallel to that of the front wall 34. The diameter of the part 35 is substantially equivalent to the diameter of the annular shoulder surface 20a in the inside of the cover 19 and this part 35 is received therewithin as shown in Figures 9 and 10, with the annular flange 36 being interference fitted within the end part 21a of flange 21 and engaged against the outer axially directed annular shoulder surface 21b of the cover 19. The axial extent of the part 35 is such as to allow the part 34 to flex forwards and backwards. When assembled, the outer circular peripheral front surface of the diaphragm 18 engages against the rear axially directed surface of the annular flange 36, whilst the central flexible portion of the diaphragm can flex into the interior of the member 33 defined within the part 35. It will thus be appreciated that the sub-chamber is defined between the right-hand surface of the diaphragm 18, as viewed in Figure 10, and the interior of the member 33. The structure of the member 33 is such that whilst its annular flange 36 is fairly rigid, the part 35 and, in particular, the circular front wall 34, are both fairly flexible, so that, in effect, the front wall 34 can be viewed as a flexible disc moving backwards and forwards relative to the fixed front surface of the cover 19, with the outlet tube 32 thus, as described, moving backwards and forwards through the central hole 20e in the front wall 20d of the the cover 19. In this way, as will be described, the disadvantage of the described prior art type of valve arrangement will be reduced or overcome.

With the arrangement described, the basic function of the valve is unaltered, namely that, in essence, with the float 28 in its highest position in the tank or cistern, the arm 29 will be horizontal or substantially so, with the result that the circular rubber sealing pad 31 will engage against the front of the outlet tube 32 to close it. Accordingly the sub-chamber between the member 33 and the diaphragm 18 will be closed and pressurised, thereby forcing the central flexible part of the rubber diaphragm onto the seat around the outlet 15 which is thereby closed. Accordingly in this position water flowing through the inlet connection 12 cannot pass to the outlet 15 and the water level in the tank or cistern remains steady.

With the arrangement described and illustrated, it has been found that when mains water pressure is applied to the inlet connection 12, the leakage of pressure through the bleed hole 18a in the diaphragm, and thus the build up of pressure in the sub-chamber is such that the flexible part of the member 33 is forced forwardly so that the outlet tube 32 is 'biased' forwardly out of the hole in the surface 22. This forwards movement of the outlet tube 32 causes it to engage tightly on the pad 31 with the effect that the arm 29 is biased so that it has a tendency to try to pivot anti-clockwise, thereby forcing the float 28 tightly down onto the upper surface of the water in the tank or cistern. Thus in this 'off' position of the valve, where no mains water is being supplied into the tank or cistern, the float is held firmly at the water surface so that there is no tendency for it to 'bob' up and down, as described with respect to the disadvantage of the prior art type valve arrangement. The buoyancy and stability of the float are thus improved in this arrangement.

When water is drawn off the tank or cistern, and the float falls, the arm will pivot downwardly in the normal way, thereby opening the outlet tube 32, relieving the pressure in the sub-chamber, allowing the central flexible part of the rubber diaphragm 18 to move to the left, thereby opening the outlet to the valve chamber. Accordingly water will then flow through the valve and into the tank or cistern, as described, until the tank or cistern is replenished and the arm is again moved to the horizontal position by the raising of the float. However the flexibility of the part of the cap-like member 33 which carries the outlet tube 32 ensures that if only a small amount of water is drawn off from the tank or cistern the outlet tube 32 moves accurately to follow movement of the rubber pad 31 so that the arm does not move successively to open and close the outlet tube from the sub-chamber as described with the prior art arrangement. Accordingly as the outlet tube can move, it is ensured that the outlet tube 32 only opens when there is a true and significant draw-off of water and that also, as described, there is no 'bobbing' of the float when replenishing of the tank or cistern takes place. Accordingly water hammer or pipe knocking as described with the prior art type valve is now overcome or mitigated. Fluctuations in the opening and closing of the valve are thus smoothed out by enabling the position of the outlet from the sub-chamber to move relative to the fixed cover 19 and thus to the sealing pad 31.

Although it is convenient that the member 33 which provides the movement of the outlet from the sub-chamber is in one piece, in an alternative embodiment an equivalently operating arrangement could comprise several different parts, for example with compression of a rubber seal acting on a movable nozzle, part of which extends through the cover 19 in the same manner as the tube 32.

## Claims

1. A fluid flow control device comprising a valve chamber (14) connecting an inlet (12) for a source of fluid and an outlet (15), a control member (17, 18) movable between respective first and second positions in which the outlet (15) is respectively open and closed with respect to the inlet (12), a sub-chamber in communication in use, with said source of fluid by way of a bleed hole (18a) and having an outlet (32), closure means (31) being movable to open or close said sub-chamber outlet (32) in response to the position of float means (28, 28a, 29), **characterized in that** the position of said sub-chamber outlet (32) is movable, in use, relative to a fixed part (19) of the device.

2. A device as claimed in Claim 1, wherein said fixed part (19) of the device, relative to which the position of said sub-chamber outlet (32) is movable, in use, carries said float means (28, 28a, 29).

3. A device as claimed in Claim 1 or Claim 2, wherein said fixed part is a cover (19) having an outlet opening (20e) therein.

4. A device as claimed in Claim 1 or Claim 2, wherein the sub-chamber outlet (32) is provided by a member (33), at least part of which is flexible.

5. A device as claimed in Claim 4, wherein the sub-chamber outlet is an outlet tube (32) on a flexible part (34) of said member (33).

6. A device as claimed in Claim 5, wherein said member (33) is of cap-like form, having a flexible front wall (34) from which said outlet tube (32) extends, said outlet tube (32) having a passage therethrough which communicates the interior of said member (33) with the exterior thereof.

7. A device as claimed in Claim 6, wherein said sub-chamber is defined between said front wall (34) of the cap-like member (33) and said control member (17, 18).

8. A device as claimed in Claim 7, wherein said control member is a flexible diaphragm (18).

9. A device as claimed in Claim 7 or Claim 8, wherein said outlet tube (32) extends through an outlet opening (20e) in said fixed part (19) of the device and is arranged to move backwards and forwards therethrough, in use, upon flexing of said front wall (34) of said cap-like member (33).

10. A device as claimed in Claim 9, wherein when the sub-chamber is pressurised, in use, by said fluid, resultant flexing of said front wall (34) of said cap-like member (33) moves said outlet tube (32) forwardly through said outlet opening (20e) to engage an engagement surface (31) of the float means (28, 28a, 29) to hold the float means (28, 28a, 29) steady.

11. A device as claimed in Claim 10, wherein said engagement surface of the float means (28, 28a, 29) is a sealing pad (31) which seals against the outlet tube (32) to pressurise the sub-chamber in a raised position of the float (28), and moves clear of said outlet tube (32) when the float means (28, 28a, 29) pivots to a lowered position thereof, thereby relieving pressure in the sub-chamber and allowing movement of said control member (17, 18) to its first position which is said open position.

12. A device as claimed in Claim 3, wherein the sub-chamber is defined between said control member (17, 18) and a member (33) providing said sub-chamber outlet (32), at least part of which member (33) is flexible.

13. A device as claimed in Claim 12, wherein said sub-chamber outlet is an outlet tube (32) on a flexible front wall (34) of said member (33), the outlet tube (32) extending through said outlet opening (20e) of the cover (19) for backwards and forwards movement therein, in use, upon flexing of said front wall (34).

14. A device as claimed in Claim 13, wherein the float means (28, 28a, 29) is pivotally mounted on the cover (19), and has sealing means (31) for engagement, in use, with said outlet tube (32), thereby pressurise the sub-chamber by said fluid and force said control member (17, 18) to its second position which is said closed position.

15. A device as claimed in Claim 14, wherein when said sub-chamber is pressurised, in use, by said fluid, resultant flexing of said front wall (34) moves said outlet tube (32) forwardly through the outlet opening (20e) of the cover (19) to engage said sealing means (31) to retain the float means (28, 28a, 29) steady.

16. A device as claimed in any one of the preceding Claims, wherein the sub-chamber is defined between said control member (14, 18) and an element (33) providing said sub-chamber outlet (32), the element (33) being of plastics material and having a flexible wall (34).

17. A device as claimed in Claim 16, wherein the element (33) providing said sub-chamber outlet (32) is of circular cap-like form, having a flexible circular front wall (34) with a central opening therein, an outlet tube (32) extending from the centre of the exterior surface of said front wall (34) and having a passage therethrough extending from said central opening, and a rear annular radial flange (36) extending outwardly from a cylindrical, axially extending portion (35) between the front wall (34) and said flange (36).

18. A device as claimed in Claim 17, wherein the outlet tube (32) is stepped down externally in a direction away from said exterior surface of said front wall (34), with said passage also being stepped down in said direction.

19. A device as claimed in Claim 18, wherein said stepping down externally forms first and second sections of the outlet tube (32), with the passageway through the first section being frusto-conical and through the second section being of constant, restricted size.

20. A fluid flow control device comprising a valve chamber (14) connecting an inlet (12) for a source of fluid and an outlet (15), a flexible diaphragm (18) movable between respective first and second positions, the diaphragm (18) opening the outlet (15) in the first position and closing the outlet (15) in the second position (15), a sub-chamber in communication, in use, with said source of fluid by way of a bleed hole (18a) and having an outlet (32), closure means (31) movable to open or close said sub-chamber outlet (32) in response to the position of float means (28, 28a, 29) pivotally mounted at a fixed part (19) of the device, **characterized in that** the position of said sub-chamber outlet (32) is movable, relative to said fixed part (19) of the device and **in that** the sub-chamber outlet (32) is defined by an element having at least a part (34) thereof which is flexible thereby, in use, to produce said movement of the sub-chamber outlet (32).

## Patentansprüche

1. Fluiddurchfluss-Steuervorrichtung, die eine Ventilkammer (14), die einen Einlass (12) für eine Fluidquelle und einen Auslass (15) miteinander verbindet, ein Steuerorgan (17, 18), das zwischen einer ersten und einer zweiten Position beweglich ist, in denen der Auslass (15) in Bezug auf den Einlass (12) geöffnet bzw. geschlossen ist, eine Nebenkammer, die im Gebrauch mit der Fluidquelle mittels eines Ableitungslochs (18a) kommuniziert und einen Auslass (32) besitzt, und eine Verschlusseinrichtung (31), die beweglich ist, um den Nebenkammerauslass (32) in Reaktion auf die Position einer Schwimmereinrichtung (28, 28a, 29) zu öffnen oder zu schließen, umfasst, **dadurch gekennzeichnet, dass** die Position des Nebenkammerauslasses (32) im Gebrauch in Bezug auf einen festen Teil (19) der Vorrichtung beweglich ist.

2. Vorrichtung nach Anspruch 1, wobei der feste Teil (19) der Vorrichtung, in Bezug auf den die Position des Nebenkammerauslasses (32) beweglich ist, im Gebrauch die Schwimmereinrichtung (28, 28a, 29) trägt.

3. Vorrichtung nach Anspruch 1 oder nach Anspruch 2, wobei der feste Teil eine Abdeckung (19) ist, in der eine Auslassöffnung (20e) vorhanden ist.

4. Vorrichtung nach Anspruch 1 oder Anspruch 2, wobei der Nebenkammerauslass (32) durch ein Organ (33) gebildet ist, wovon wenigstens ein Teil flexibel ist.

5. Vorrichtung nach Anspruch 4, wobei der Nebenkammerauslass ein Auslassrohr (32) an einem flexiblen Teil (34) des Organs (33) ist.

6. Vorrichtung nach Anspruch 5, wobei das Organ (33) eine kappenartige Form mit einer flexiblen Vorderwand (34) hat, von der sich das Auslassrohr (32) erstreckt, wobei das Auslassrohr (32) einen hindurch verlaufenden Durchlass besitzt, der eine Verbindung zwischen dem Innenraum des Organs (33) und seiner äußeren Umgebung herstellt.

7. Vorrichtung nach Anspruch 6, wobei die Nebenkammer zwischen der Vorderwand (34) des kappenartigen Organs (33) und dem Steuerorgan (17, 18) definiert ist.

8. Vorrichtung nach Anspruch 7, wobei das Steuerorgan eine flexible Membran (18) ist.

9. Vorrichtung nach Anspruch 7 oder Anspruch 8, wobei sich das Auslassrohr (32) durch eine Auslassöffnung (20e) in dem festen Teil (19) der Vorrichtung erstreckt und so beschaffen ist, dass es sich im Gebrauch bei einer Biegung der Vorderwand (34) des kappenartigen Organs (33) rückwärts und vorwärts durch sie bewegt.

10. Vorrichtung nach Anspruch 9, wobei dann, wenn die Nebenkammer im Gebrauch durch das Fluid mit Druck beaufschlagt wird, die sich daraus ergebende Biegung der Vorderwand (34) des kappenartigen Organs (33) das Auslassrohr (32) durch die Auslassöffnung (20e) vorwärts bewegt, um mit einer Eingriffoberfläche (31) der Schwimmereinrichtung (28, 28a, 29) in Eingriff zu gelangen, um die Schwimmereinrichtung (28, 28a, 29) stabil zu halten.

11. Vorrichtung nach Anspruch 10, wobei die Eingriffoberfläche der Schwimmereinrichtung (28, 28a, 29) ein Dichtungskissen (31) ist, das gegen das Auslassrohr (32) abdichtet, um die Nebenkammer in einer angehobenen Position des Schwimmers (28) mit Druck zu beaufschlagen, und sich aus dem Auslassrohr (32) bewegt, wenn die Schwimmereinrichtung (28, 28a, 29) in eine abgesenkte Position schwenkt, um **dadurch** den Druck in der Nebenkammer zu entlasten und um eine Bewegung des Steuerorgans (17, 18) in seine erste Position, die die geöffnete Position ist, zuzulassen.

12. Vorrichtung nach Anspruch 3, wobei die Nebenkammer zwischen dem Steuerorgan (17, 18) und einem Organ (33), das den Nebenkammerauslass (32) bildet und wovon wenigstens ein Teil flexibel ist, definiert ist.

13. Vorrichtung nach Anspruch 12, wobei der Nebenkammerauslass ein Auslassrohr (32) an einer flexiblen Vorderwand (34) des Organs (33) ist, wobei sich das Auslassrohr (32) durch die Auslassöffnung (20e) der Abdeckung (19) erstreckt, um sich im Gebrauch bei einer Biegung der Vorderwand (34) darin rückwärts und vorwärts zu bewegen.

14. Vorrichtung nach Anspruch 13, wobei die Schwimmereinrichtung (28, 28a, 29) an der Abdeckung (19) schwenkbar angebracht ist und eine Dichtungseinrichtung (31) besitzt, die dazu vorgesehen ist, im Gebrauch mit dem Auslassrohr (32) in Eingriff zu gelangen, um **dadurch** die Nebenkammer durch das Fluid mit Druck zu beaufschlagen und das Steuerorgan (17, 18) in seine zweite Position, die die geschlossene Position ist, zu drängen.

15. Vorrichtung nach Anspruch 14, wobei die Nebenkammer im Gebrauch durch das Fluid mit Druck beaufschlagt wird, wobei eine daraus sich ergebende Biegung der Vorderwand (34) das Auslassrohr (32) vorwärts durch die Auslassöffnung (20e) der Abdeckung (19) bewegt, um mit der Dichtungseinrichtung (31) in Eingriff zu gelangen, um die Schwimmereinrichtung (28, 28a, 29) stabil zu halten.

16. Vorrichtung nach einem der vorhergehenden Ansprüche, wobei die Nebenkammer zwischen dem Steuerorgan (17, 18) und einem Element (33), das den Nebenkammerauslass (32) bildet, definiert ist, wobei das Element (33) aus Kunststoff ist und eine flexible Wand (34) besitzt.

17. Vorrichtung nach Anspruch 16, wobei das Element (33), das den Nebenkammerauslass (32) bildet, eine kreisförmige, kappenartige Form hat und eine flexible kreisförmige Vorderwand (34) besitzt, in der eine mittige Öffnung vorhanden ist, wobei sich ein Auslassrohr (32) von dem Zentrum der äußeren Oberfläche der Vorderwand (34) erstreckt und einen hindurch verlaufenden Durchlass besitzt, der sich von der mittigen Öffnung erstreckt, und einen hinteren ringförmigen radialen Flansch (36) besitzt, der sich von einem zylindrischen, axial verlaufenden Abschnitt (35) zwischen der Vorderwand (34) und dem Flansch (36) nach außen erstreckt.

18. Vorrichtung nach Anspruch 17, wobei das Auslassrohr (32) in einer von der äußeren Oberfläche der Vorderwand (34) wegweisenden Richtung außen abnimmt, wobei auch der Durchlass in dieser Richtung abnimmt.

19. Vorrichtung nach Anspruch 18, wobei die äußere Abnahme einen ersten und einen zweiten Abschnitt des Auslassrohrs (32) bildet, wobei der Durchlass durch den ersten Abschnitt kegelstumpfförmig ist und der Durchlass durch den zweiten Abschnitt eine konstante, eingeschränkte Größe besitzt.

20. Fluiddurchfluss-Steurvorrichtung, die eine Ventilkammer (14), die einen Einlass (12) für eine Fluidquelle mit einem Auslass (15) verbindet, eine flexible Membran (18), die zwischen einer ersten und einer zweiten Position beweglich ist, wobei die Membran (18) den Auslass (15) in der ersten Position öffnet und den Auslass (15) in der zweiten Position verschließt, eine Nebenkammer, die im Gebrauch mit der Fluidquelle durch ein Ableitungsloch (18a) in Verbindung steht und einen Auslass (32) besitzt, und eine Verschlusseinrichtung (31), die beweglich ist, um den Nebenkammerauslass (32) in Reaktion auf die Position einer Schwimmereinrichtung (28, 28a, 29), die an einem festen Teil (19) der Vorrichtung schwenkbar angebracht ist, zu öffnen oder zu schließen, umfasst, **dadurch gekennzeichnet, dass** die Position des Nebenkammerauslasses (32) in Bezug auf den festen Teil (19) der Vorrichtung beweglich ist und dass der Nebenkammerauslass (32) durch ein Element definiert ist, wovon wenigstens ein Teil (34) flexibel ist, um im Gebrauch die Bewegung des Nebenkammerauslasses (32) hervorzurufen.

## Revendications

1. Dispositif de commande d'écoulement de fluide comprenant une chambre de soupape (14) raccordant une entrée (12) pour une source de fluide et une sortie (15), un élément de commande (17, 18) mobile entre les première et seconde positions respectives dans lesquelles la sortie (15) est respectivement ouverte et fermée par rapport à l'entrée (12), une sous-chambre en communication, en fonctionnement, avec ladite source de fluide au moyen d'un trou de purge (18a) et ayant une sortie (32), des moyens de fermeture (31) étant mobiles pour ouvrir ou fermer ladite sortie (32) de sous-chambre en réponse à la position des moyens formant flotteur (28, 28a, 29), **caractérisé en ce que** la position de ladite sortie (32) de sous-chambre est mobile, en fonctionnement, par rapport à une partie fixe (19) du dispositif.

2. Dispositif selon la revendication 1, dans lequel ladite partie fixe (19) du dispositif, par rapport à laquelle la position de ladite sortie (32) de sous-chambre est mobile, en fonctionnement, supporte lesdits moyens formant flotteur (28, 28a, 29).

3. Dispositif selon la revendication 1 ou la revendication 2, dans lequel ladite partie fixe est un couvercle (19) ayant une ouverture de sortie (20e), à l'intérieur de celui-ci.

4. Dispositif selon la revendication 1 ou la revendication 2, dans lequel la sortie (32) de sous-chambre est fournie par un élément (33), dont au moins une partie est flexible.

5. Dispositif selon la revendication 4, dans lequel la sortie de sous-chambre est un tube de sortie (32) sur une partie flexible (34) dudit élément (33).

6. Dispositif selon la revendication 5, dans lequel ledit élément (33) se présente sous une forme de capuchon, ayant une paroi avant flexible (34) à partir de laquelle ledit tube de sortie (32) s'étend, ledit tube de sortie (32) ayant un passage à travers celui-ci qui fait communiquer l'intérieur dudit élément (33) avec son extérieur.

7. Dispositif selon la revendication 6, dans lequel ladite sous-chambre est définie entre ladite paroi avant (34) de l'élément en forme de capuchon (33) et ledit élément de commande (17, 18).

8. Dispositif selon la revendication 7, dans lequel ledit élément de commande est un diaphragme flexible (18).

9. Dispositif selon la revendication 7 ou la revendication 8, dans lequel ledit tube de sortie (32) s'étend à travers une ouverture de sortie (20e) dans ladite partie fixe (19) du dispositif et est agencé pour se déplacer en arrière et en avant à travers celui-ci, en fonctionnement, suite à la flexion de ladite paroi avant (34) dudit élément en forme de capuchon (33).

10. Dispositif selon la revendication 9, dans lequel lorsque la sous-chambre est mise sous pression, en fonctionnement, par ledit fluide, la flexion résultante de ladite paroi avant (34) dudit élément en forme de capuchon (33) déplace ledit tube externe (32) vers l'avant à travers ladite ouverture de sortie (20e) pour mettre en prise une surface de mise en prise (31) des moyens formant flotteur (28, 28a, 29) pour maintenir les moyens formant flotteur (28, 28a, 29) stables.

11. Dispositif selon la revendication 10, dans lequel ladite surface de mise en prise des moyens formant flotteur (28, 28a, 29) est un patin d'étanchéité (31) qui réalise l'étanchéité contre le tube de sortie (32) pour mettre sous pression la sous-chambre dans une position levée du flotteur (28) et se déplace débarrassé dudit tube de sortie (32) lorsque les moyens formant flotteur (28, 28a, 29) pivotent dans leur position abaissée, libérant ainsi la pression dans la sous-chambre et permettant le mouvement dudit élément de commande (17, 18) dans sa première position, qui est ladite position ouverte.

12. Dispositif selon la revendication 3, dans lequel la sous-chambre est définie entre ledit élément de commande (17, 18) et un élément (33) fournissant ladite sortie de sous-chambre (32), dont au moins une partie de l'élément (33) est flexible.

13. Dispositif selon la revendication 12, dans lequel ladite sortie de sous-chambre est un tube de sortie (32) sur une paroi avant flexible (34) dudit élément (33), le tube de sortie (32) s'étendant à travers ladite ouverture de sortie (20e) du couvercle (19) pour le mouvement arrière et avant à l'intérieur de celui-ci, en fonctionnement, suite à la flexion de ladite paroi avant (34).

14. Dispositif selon la revendication 13, dans lequel le moyen formant flotteur (28, 28a, 29) est monté de manière pivotante sur le couvercle (19) et a des moyens d'étanchéité (31) pour la mise en prise, en fonctionnement, avec ledit tube de sortie (32), mettant ainsi sous pression la sous-chambre par ledit fluide et force ledit élément de commande (17, 18) dans sa seconde position, qui est ladite position fermée.

15. Dispositif selon la revendication 14, dans lequel lorsque ladite sous-chambre est mise sous pression, en fonctionnement par ledit fluide, la flexion résultante de ladite paroi avant (34) déplace ledit tube de sortie (32) vers l'avant à travers l'ouverture de sortie (20e) du couvercle (19) pour mettre en prise lesdits moyens d'étanchéité (31) pour retenir les moyens formant flotteur (28, 28a, 29) stables.

16. Dispositif selon l'une quelconque des revendications précédentes, dans lequel la sous-chambre est définie entre ledit élément de commande (17, 18) et un élément (33) fournissant ladite sortie (32) de sous-chambre, l'élément (33) étant réalisé en matière plastique et ayant une paroi flexible (34).

17. Dispositif selon la revendication 16, dans lequel l'élément (33) fournissant ladite sortie (32) de sous-chambre a une forme de capuchon circulaire ayant une paroi avant (34) circulaire flexible avec une ouverture centrale à l'intérieur de celle-ci, un tube de sortie (32) s'étendant à partir du centre de la surface extérieure de ladite paroi avant (34) et ayant un passage à travers celle-ci s'étendant à partir de ladite ouverture centrale, et un rebord radial annulaire arrière (36) s'étendant vers l'extérieur à partir d'une partie s'étendant (35) de manière axiale cylindrique entre la paroi avant (34) et ledit rebord (36).

18. Dispositif selon la revendication 17, dans lequel le tube de sortie (32) est rétréci vers le bas à l'extérieur dans une direction à distance de ladite surface extérieure de ladite paroi avant (34), avec ledit passage qui est également étagé vers le bas dans ladite direction.

19. Dispositif selon la revendication 18, dans lequel ledit rétrécissement vers le bas forme extérieurement des première et seconde sections du tube de sortie (32), avec la voie de passage à travers la première section qui est tronconique et à travers la seconde section qui a une taille resserrée constante.

20. Dispositif de commande d'écoulement de fluide comprenant une chambre de soupape (14) raccordant une entrée (12) pour une source de fluide et une sortie (15), un diaphragme flexible (18) mobile entre les première et seconde positions respectives, le diaphragme (18) ouvrant la sortie (15) dans la première position et fermant la sortie (15) dans la seconde position, une sous-chambre en communication, en fonctionnement, avec ladite source de fluide au moyen d'un trou de purge (18a) et ayant une sortie (32), des moyens de fermeture (31) mobiles pour ouvrir ou fermer ladite sortie (32) de sous-chambre en réponse à la position des moyens formant flotteur (28, 28a, 29) montés de manière pivotante au niveau d'une partie fixe (19) du dispositif, **caractérisé en ce que** la position de ladite sortie (32) de sous-chambre est mobile par rapport à ladite partie fixe (19) du dispositif, et **en ce que** la sortie (32) de sous-chambre est définie par un élément ayant au moins une partie (34) qui est flexible, pour produire ainsi, en fonctionnement, ledit mouvement de la sortie (32) de sous-chambre.
